# EUROPEAN PATENT APPLICATION

(11) **EP 1 426 558 A2**
(43) Date of publication of application: **09.06.2004**
(21) Application number: 03257323.0
(22) Date of filing: 19.11.2003
(51) Int. Cl.: F01D 9/02

(54) **Gas turbine transition piece with dimpled surface and cooling method for such a transition piece**

(30) Priority: 22.11.2002 US 301672
(71) Applicant: GENERAL ELECTRIC COMPANY, Schenectady, NY 12345 (US)
(72) Inventor: Bunker, Ronald Scott, Niskayuna New York 12309 (US)
(74) Representative: Goode, Ian Roy

(57) **Abstract**

A transition piece assembly (42) for a gas turbine includes a transition piece (44) having one end adapted for connection to a gas turbine combustor and an opposite end adapted for connection to a first turbine stage; the transition piece has an exterior surface formed with a plurality of concave dimples (48) thereon. An impingement flow sleeve (46) surrounds the transition piece, establishing a plenum (54) therebetween. The impingement sleeve is formed with a plurality of cooling apertures (52) therein for introducing compressor cooling air into the plenum.

## Description

This invention relates generally to turbine components and more particularly to a transition piece assembly that conducts combustion gases from the combustor to the turbine stages in land based gas turbines having can annular combustion systems.

Traditional gas turbine combustors use diffusion (i.e., non-premixed) flames in which fuel and air enter the combustion chamber separately. The process of mixing and burning produces flame temperatures exceeding 3900 degrees F. Since conventional combustors and/or transition pieces having liners are generally capable of withstanding for about ten thousand hours (10,000), a maximum temperature on the order of only about 1500 degrees F., steps to protect the combustor and/or transition piece must be taken. This has typically been done by film-cooling which involves introducing relatively cool compressor air into a plenum formed by the combustor liner surrounding the outside of the combustor. In this prior arrangement, the air from the plenum passes through louvers in the combustor liner and then passes as a film over the inner surface of the liner, thereby maintaining combustor liner integrity.

Because diatomic nitrogen rapidly disassociates at temperatures exceeding about 3000°F. (about 1650°C.), the high temperatures of diffusion combustion result in relatively large NOx emissions. One approach to reducing NOx emissions has been premix the maximum possible amount of compressor air with fuel. The resulting lean premixed combustion produces cooler flame temperatures and thus lower NOx emissions. Although lean premixed combustion is cooler than diffusion combustion, the flame temperature is still too hot for prior conventional combustor components to withstand.

Furthermore, because the advanced combustors premix the maximum possible amount of air with the fuel for NOx reduction, little or no cooling air is available, making film-cooling of the combustor liner and transition piece premature at best. Nevertheless, combustor liners require active cooling to maintain material temperatures below limits. In dry low NOx (DLN) emission systems, this cooling can only be supplied as cold side convection. Such cooling must be performed within the requirements of thermal gradients and pressure loss. Thus, means such as thermal barrier coatings in conjunction with "backside" cooling have been considered to protect the combustor liner and transition piece from destruction by such high heat. Backside cooling involved passing the compressor air over the outer surface of the combustor liner and transition piece prior to premixing the air with the fuel.

Heavy frame gas turbines use transition pieces to conduct the combustion gases from each combustor "can" to a sector of turbine first stage inlet nozzles. These transition pieces are cooled either by backside convection or by impingement jet arrays with crossflow convection. Older designs rely primarily on "loose" convection cooling in the area surrounding the transition pieces. "Loose" convection means that the convective cooling is not a strong forced convection by means of a flow sleeve, but a weak convection with a lower velocity and larger flow area around the transition piece.

Current transition pieces in operation in the field, especially on older turbine designs of heavy frame units, experience problems with spallation and reduced availability/life.

Extended transition piece life has been addressed by the addition of thermal barrier coatings (TBC), or by changing materials to higher temperature capability. Newer machine designs use active impingement cooling, but these are in conjunction with dry low NOx (DLN) systems where little air is released into the combustor liner and transition piece hot gas path.

This invention provides an improved convectively cooled design for transition piece assemblies by fabricating a series of concavities or dimples in the cold-side surface, and wrapping a sheet metal flow sleeve around the transition piece. The surface dimples enhance the cooling capability and the flow sleeve directs the cooling flow along the surface of the transition piece towards the combustor liner.

The dimpled surface of the transition piece increases the heat transfer coefficients by a factor of 1.5 to 2 compared to the non-dimpled case. The result is a 50 to 100°F. reduction in transition piece metal temperature, leading to longer life and reduced TBC spalling. The cooling air which flows to the combustor liner will be somewhat warmer because of the transition piece cooling, but this impact will be significantly diluted by substantial mixing with other cooling flow introduced into the combustor. The flow sleeve, similar to modern designs, will allow a positive and controlled direction to the cooling flow over the transition piece.

Accordingly, in its broader aspects, the invention relates to a transition piece assembly for a gas turbine comprising a transition piece having one end adapted for connection to a gas turbine combustor liner and an opposite end adapted for connection to a first turbine stage; the transition piece having an exterior surface formed with a plurality of concave dimples thereon; and an impingement flow sleeve surrounding the transition piece and establishing a plenum therebetween, the impingement flow sleeve formed with a plurality of cooling apertures therein.

In another aspect, a transition piece assembly for a gas turbine comprising a transition piece having one end adapted for connection to a gas turbine combustor and an opposite end adapted for connection to a first turbine stage; the transition piece having an exterior surface formed with a plurality of round concave dimples thereon, having diameters D and depths ranging from about 0.05 to 0.50 D; and an impingement flow sleeve surrounding the transition piece and establishing a cooling path therebetween, the impingement sleeve formed with a plurality of cooling apertures therein.

In still another aspect, the invention relates to a method of cooling a transition piece connected between a gas turbine combustor and a first turbine stage with air discharged from a compressor comprising: a) surrounding the transition piece with an impingement flow sleeve provided with a plurality of cooling apertures to thereby form a plenum between the transition piece and the impingement flow sleeve; b) establishing a flow path for compressor discharge air through the impingement sleeve into the plenum; and c) forming a plurality of concave dimples on a cold side surface of the transition piece to enhance heat transfer coefficients of the transition piece.

The invention will now be described in detail in conjunction with the accompanying drawings, in which:
FIGURE 1 is a schematic representation of a known gas turbine combustor with transition piece;
FIGURE 2 is a schematic view of a cylindrical combustor liner and transition piece wherein the liner is provided with linear turbulators; and

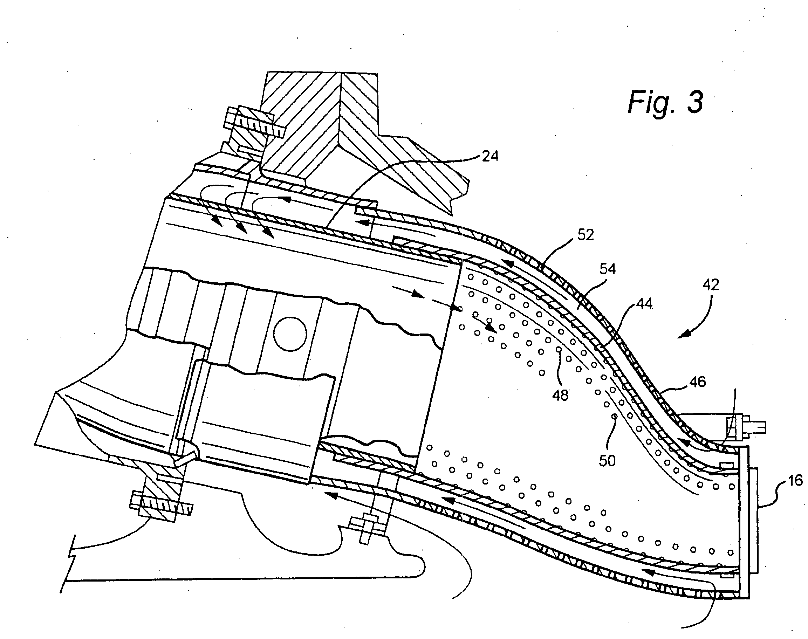

FIGURE 3 is a schematic side elevation view of a transition piece provided with a plurality of discrete, concave dimples on the external surface thereof in accordance with the invention.

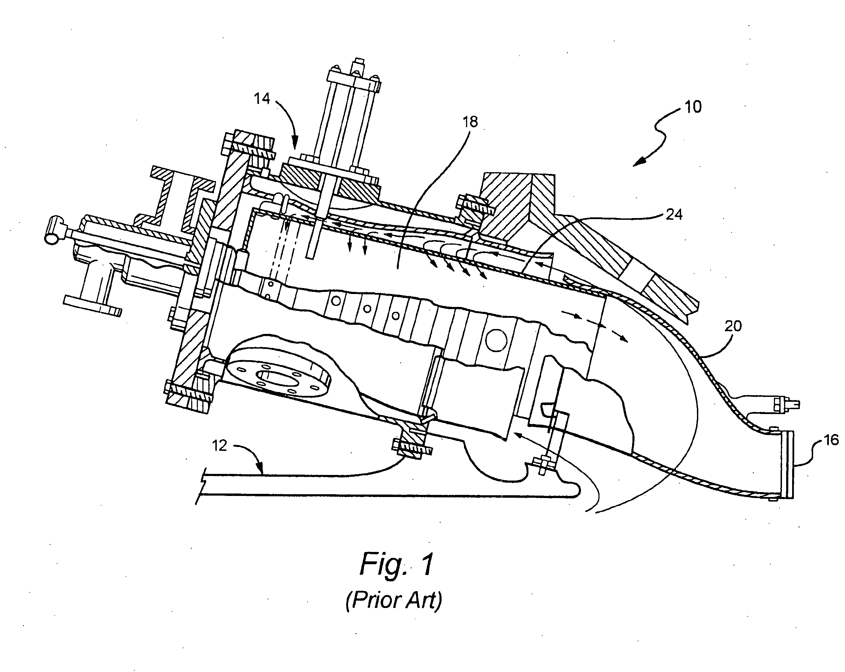

Figure 1 schematically illustrates a typical can annular reverse-flow combustor 10 driven by the combustion gases from a fuel where a flowing medium with a high energy content, i.e., the combustion gases, produces a rotary motion as a result of being deflected by rings of blading mounted on a rotor. In operation, discharge air from the compressor 12 (compressed to a pressure on the order of about 250-400 lb/in²) reverses direction as it passes over the outside of the combustors (one shown at 14) and again as it enters the combustor en route to the turbine (first stage indicated at 16). Compressed air and fuel are burned in the combustion chamber 18, producing gases with a temperature of about 1500° C. or about 2730° F. These combustion gases flow at a high velocity into turbine section 16 via transition piece 20. The transition piece connects to the combustor liner 24 at 22, but in some applications, a discrete connector segment may be located between the transition piece 20 and the combustor liner.

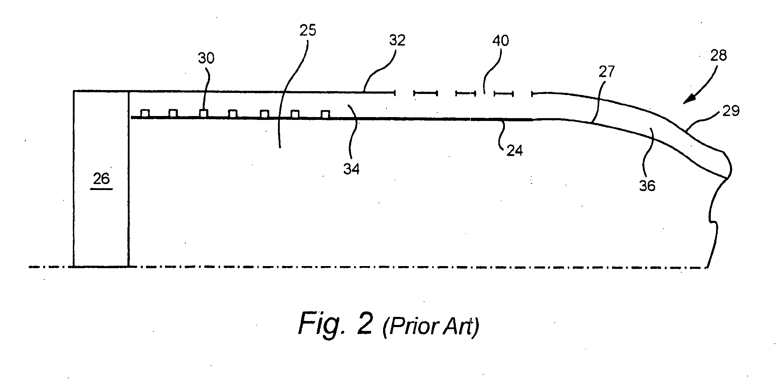

Figure 2 shows in schematic form a generally cylindrical combustor liner 24 of conventional construction, forming a combustion chamber 25. The combustor liner 24 has a combustor head end 26 to which the combustors (not shown) are attached, and an opposite or forward end to which a double-walled transition piece assembly 28 is attached. The transition piece assembly includes the transition piece 27 and a surrounding sleeve 29. The transition piece assembly 28 may be connected to the combustor liner 24 and its respective flow sleeve 32 by connecting double-wall segments (not shown).

The combustor liner 24 is provided with a plurality of upstanding, annular (or part-annular) ribs or turbulators 30 in a region adjacent the head end 26. A cylindrical flow sleeve 32 surrounds the combustor liner in radially spaced relationship, forming a plenum 34 between the liner and flow sleeve that communicates with a plenum 36 formed by the transition piece 27 and its outer sleeve 29. Impingement cooling holes 40 are provided in the flow sleeve 32, for introducing compressor cooling air into the plenums 34.

Turning to Figure 4, a transition piece assembly 42 in accordance with an exemplary embodiment of this invention includes the transition piece 44 and a surrounding impingement flow sleeve 46 attached to the turbine end of the liner 24. The transition piece 44 is formed with a series of discrete surface dimples or concavities 48 on the exterior or cold side surface thereof. The dimples 48 may be round or oval in shape, with a part spherical inner portion 50. For round dimples, diameters may be linked to the height or depth of the dimples, for example, for a diameter D, the depth of the dimples may be in the range of about 0.05 to 0.50 D. The dimples may be uniformly spaced in aligned or staggered rows or in non-uniform arrays, with center-to-center spacings of from about 1.1 D to 5 D.

The impingement flow sleeve 46 that is formed with a plurality of impingement cooling apertures 52 by which compression cooling air enters the plenum 54 created between the impingement flow sleeve 46 and the outer surface of the transition piece 44 to interact with the dimples 48 on the cold side surface thereof. Thus, the flow sleeve 46 assures that the convection cooling air is directed as desired along the transition piece 44 from the turbine end to the combustor liner end, over the dimpled surface, increasing the heat transfer coefficients and reducing the temperature of the transition piece.

## Claims

1. A transition piece assembly (42) for a gas turbine comprising:
a transition piece (44) having one end adapted for connection to a gas turbine combustor liner (24) and an opposite end adapted for connection to a first turbine stage (16); said transition piece (44) having an exterior surface formed with a plurality of concave dimples (48) thereon; and
an impingement flow sleeve (46) surrounding said transition piece (44) and establishing a plenum (54) therebetween, said impingement flow sleeve formed with a plurality of cooling apertures (52) therein.

2. The transition piece assembly of claim 1 wherein said concave dimples (48) are arranged in a staggered array.

3. The transition piece assembly of claim 1 or claim 2 wherein said concave dimples (48) are round.

4. The transition piece assembiy of any one of ciaims 1 to 3 wherein said concave dimples (48) have diameters D and depths ranging from about 0.05 to 0.50 D.

5. The transition piece assembly of claim 1 wherein said concave dimples (48) are oval in shape.

6. The transition piece assembly of claim 4 wherein said plurality of concave dimples (48) have center-to-center spacings of from about 1.1 D to 5 D.

7. A method of cooling a transition piece (44) connected between a gas turbine combustor and a first turbine stage with air discharged from a compressor comprising:
a) surrounding the transition piece with an impingement flow sleeve (46) provided with a plurality of cooling apertures (52) to thereby form a plenum (54) between said transition piece (44) and said impingement flow sleeve (46);
b) establishing a flow path for compressor discharge air through said impingement sleeve (46) into said plenum (54); and
c) forming a plurality of concave dimples (48) on said transition piece (44) to enhance heat transfer coefficients of said transition piece.

8. The method of claim 7 wherein said concave dimples (48) are arranged in a staggered array.

9. The method of claim 7 wherein said concave dimples (48) are round.

10. The method of claim 9 wherein said concave dimples (48) have diameters D and depths ranging from about 0.05 to 0.50 D.
